# EUROPEAN PATENT APPLICATION

(11) **EP 4 494 821 A1**
(43) Date of publication of application: **22.01.2025**
(21) Application number: 24188845.2
(22) Date of filing: 16.07.2024
(51) Int. Cl.: B25J 15/10, B25J 15/12, B25J 13/08

(54) **SYSTEM, METHOD, AND DEVICE FOR GRIPPING FRAGILE OR IRREGULARLY-SHAPED OBJECTS**

(30) Priority: 17.07.2023 US 202363513947 P
(71) Applicant: MacDonald, Dettwiler and Associates Inc., Brampton, Ontario L6Y 6K7 (CA)
(72) Inventor: Dickinson, Cameron, Brampton, Ontario, L6Y 6K7 (CA)
(74) Representative: Grünecker Patent- und Rechtsanwälte PartG mbB

(57) **Abstract**

An apparatus for gripping fragile or irregularly shaped objects is provided. The apparatus includes a passive gripper assembly including an actuator for providing load to the passive gripper assembly. The passive gripper assembly further includes fingers to transmit the load to the object. Each finger includes a mechanical linkage to direct the load to the object, having a first end connected to the actuator and a second, free end. Each finger further includes a contact assembly disposed at the free end of the mechanical linkage that acts as a gripping interface. At least one of the contact assemblies is passive including deflectable elements configured to deflect upon contacting the object to distribute a gross clamping pressure. The load causes the fingers of the passive gripper assembly to close around the object such that the contact assemblies contact and apply the gross clamping pressure to the object.

## Description

### Technical Field

The following relates generally to devices for gripping and manipulating objects, and more particularly to systems, methods, and devices for gripping fragile or irregularly shaped objects and for gripping objects in low-gravity and 0G environments.

### Introduction

Gripping fragile objects can lead to damaging the object. Enough pressure must be applied to secure the object against external forces or applied forces. This pressure must be substantial enough to secure the object to enable tasks or objectives. Mission objectives may include sampling, resource mining, retrieval, and/or repair. Applying the securing pressure, however, can lead to damage of the object.

This application of pressure can be further complicated by features of the object such as irregular external geometry and varying robustness (i.e., different areas of the object may be able to tolerate different levels of force). For example, sensitive equipment such as electronic sensors or space debris may need to be gripped along a particular surface for repair or analysis. Furthermore, the objects' surfaces are unlikely to be smooth, flat surfaces and may comprise different materials at various points. Therefore, a gripper that applies a force using a rigid non-conforming (e.g., planar) surface may result in a force concentration on the object potentially in a location intolerant of the resulting pressure and induced stresses in the material.

Objects may also be brittle and subject to crumbling if gripped too hard much in the way a burnt-out fire log may crumble when grasped with fire tongs. These objects may be more prevalent in specialized environments such as low gravity environments. In these environments, with gravitational forces significantly less than 1g, the objects are less likely than terrestrial objects to experience environmental pressures that would crush them. Therefore, these fragile objects are much more likely to be present in these environments.

Furthermore, in a low gravity environment, the amount of force required to secure the object may be less than if the object was on earth as the gripper forces do not need to overcome earth's gravity. Therefore, objects that are too fragile to be secured in terrestrial environments have the potential to be gripped in these environments. Terrestrial grippers are unlikely to have been designed with such fragile objects in mind. Therefore, use of grippers designed for terrestrial use on these fragile objects is likely to cause damage.

Existing approaches to grippers for fragile objects use polymeric, rubber, and/or elastic end effectors commonly referred to as pads that conform to the object, pneumatic bellows or bladders, or a combination of both. Examples of grippers that include pads are described in patents US 11207787 B2, US 9464642 B2, US 10889004 B2, US 11077565 B2, US 11247348 B2, and US 9956691 B1.

Pad-based grippers may still induce a significant stress concentration in the object. The stress concentration may be due to the monolithic nature of the pad. With this monolithic nature it is hard to control the local applied pressure as the pad conforms to the surface of the object and the load is distributed on the object. This can be problematic for particularly brittle objects that are sensitive to even these momentary stress concentrations (impulses). These objects may lack the elasticity to tolerate such impulses.

Additionally, grippers that use pneumatics, such as described in patents US 10016899 B2, US 11307787 B2, US 9464642 B2, and US 11247348 B2, can present challenges in certain environments. These challenging environments include those where temperature is outside standard ranges, such as space. Alternatively, active controls can be used to limit the forces applied to objects. However, this requires sensors, processors, and actuators which are expensive, complex, and can be life-limiting.

Accordingly, there is a need for an improved system, method, and device for gripping objects that overcomes at least some of the disadvantages of existing systems and methods.

### Summary

An apparatus for gripping fragile or irregularly shaped objects is provided. The apparatus includes a passive gripper assembly. The passive gripper assembly includes an actuator for providing a load to the passive gripper assembly and a plurality of fingers each to transmit the load to the object. Each one of the plurality of fingers includes a mechanical linkage having a first end connected to the actuator and a second, free end, the mechanical linkage configured to direct the load to the object, and a contact assembly disposed at the free end of the mechanical linkage that acts as a gripping interface between the finger and a contact surface of the object. At least one of the contact assemblies is a passive contact assembly including a plurality of deflectable elements configured to deflect upon contacting the contact surface of the object to distribute a gross clamping pressure. The load causes the fingers of the passive gripper assembly to close around the object such that the contact assemblies contact and apply the gross clamping pressure to the object based on a magnitude of the load.

The deflectable element may include at least one deformable element that deforms when the deflectable element contacts the contact surface of the object, and wherein the deflection of the deflectable element is based on the deformation of the deformable element.

The deformable element may be one or more of a bending element, a compressive element, a proportional element, and a damping element.

The deflectable element may include at least one rigid element that remains substantially undeformed when the deflectable element deflects.

The apparatus may further comprise a feedback sensor configured to measure a change in the passive gripper assembly, wherein a magnitude of the change indicates a magnitude of the gross clamping pressure provided by the passive gripper assembly on the object at the time of the measurement.

The feedback sensor may be disposed on the mechanical linkage of at least one finger or on the mounting structure of the passive contact assembly.

The feedback sensor may be an optical feedback sensor, an infrared feedback sensor, or a strain gauge.

The change of the passive gripper assembly may be a strain or deflection of a component of the passive gripper assembly.

The apparatus may further comprise a control system communicatively connected to the actuator and configured to provide a control signal to the actuator for controlling the load. The load provided by the actuator is based on the control signal. The feedback sensor is configured to provide a feedback signal indicating a current gross clamping pressure to the control system. The control signal is based on a comparison of the current gross clamping pressure and a predetermined gross clamping pressure by the control system.

The deflectable elements may be cantilevered bristles or other spring elements that deflect to limit contact force applied to the object.

The feedback sensor may be a strain gauge affixed to at least one of the cantilevered bristles or other spring elements.

The apparatus may further comprise an imaging system configured to image the gripper assembly while gripping the object and analyze the image to determine if pressure points of the contact assemblies on the object exceed a predetermined threshold load force.

The imaging system may apply a shape function to the object in the image, and analyzing the image may include analyzing the shape function.

Each of the deflectable elements may include one of a spring element, damping element, and bending element traversing an entire length of the deflectable element.

Each of the deflectable elements may include a plurality of subelements disposed in series. The subelements may be selected from two or more of a spring element, damping element, bending element, and rigid element.

The spring element may be a coil hairspring.

At least two of the plurality of fingers may move when closing around the object.

An underactuated gripper having a passively force-limited gripping surface for grappling and manipulation of fragile or irregularly shaped objects in low gravity and 0G environments is provided. The apparatus includes: an actuator for providing a load for gripping; first and second gripping fingers, each connected to the actuator at a respective first end, the first and second gripping fingers configured to open and close in response to an input from the actuator; a first contact surface disposed at a second, free end of the first gripping finger and a second contact surface disposed at a second, free end of the second gripping finger, the first and second contact surfaces for applying a predetermined and low amount of pressure to an object being gripped as the first and second fingers close on the object; the first and second contact surfaces each having a plurality of spring elements disposed thereon which passively deflect upon contacting the object as the first and second fingers close around the object to (i) distribute a clamping load across the first and second contacting surfaces, (ii) limit the contact force applied to the object, and (iii) conform to irregularities in a surface profile of the object.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a securing apparatus for gripping a fragile or irregularly shaped object, according to an embodiment;
Figure 2 is a block diagram of the gripper assembly of Figure 1, according to an embodiment;
Figure 3 is a perspective view schematic diagram illustrating an example of the gripper assembly of Figure 2, according to an embodiment;
Figure 4 is a block diagram illustrating the passive contact assembly of Figure 2 in further detail, according to an embodiment;
Figure 5A is a side perspective view illustrating an example of the passive contact assembly of Figure 4, according to an embodiment;
Figure 5B is a side perspective view illustrating an example of the passive contact assembly of Figure 4, according to an embodiment;
Figure 6A is a cross-sectional schematic diagram illustrating an example of the passive contact assembly of Figure 2 with a bending element in contact with an object, according to an embodiment;
Figure 6B is a cross-sectional schematic diagram illustrating an example of the passive contact assembly of Figure 2 with a proportional element in contact with an object, according to another embodiment;
Figure 6C is a cross-sectional schematic diagram illustrating an example of the passive contact assembly of Figure 2 with a damping element in contact with an object, according to another embodiment;
Figure 6D is a cross-sectional schematic diagram illustrating an example of the passive contact assembly of Figure 2 with a rigid element in contact with an object, according to another embodiment; and
Figure 7 is a flow diagram of a method for gripping an object using a passive gripper assembly, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to devices for securing, gripping, and manipulating objects, and more particularly to systems, methods, and devices for gripping fragile or irregularly shaped objects and for gripping objects in 0G environments. By using an under-actuated gripper with a passively force-limited gripping surface as described in the present disclosure, a simple, robust gripper can be used to apply such a pressure to an object while minimizing the high cost and risk generally associated with more complex, highly-instrumented gripper systems.

The device of the present disclosure includes a gripper assembly capable of providing a compressive force about a contact surface of a target object. This compressive pressure (compressive force/contact surface), also referred to as securing pressure or gripping pressure, secures the object. The object may be secured for grappling and/or manipulation. The gripper assembly may act as a robotic hand.

The gripper assembly includes a series of deflectable elements along a mounting structure. The deflectable elements provide an interface between the gripper assembly and the target object. The deflectable elements deflect in response to contacting the object. This deflection is passive in that the deflection is a result of the compressive pressure.

This deflection distributes the securing pressure about the contact surface of the object. The granularity of the compressive elements helps control the local contact stresses to within a threshold level without having to measure and control the compressive elements with. Avoiding these measurements and control, for example, avoids otherwise necessary use of attendant sensing and actuation processing. This allows elements typically included in gripping systems for these purposes such as sensors and actuators to be avoided. Safely avoiding these elements may reduce a potential failure mode, system mass, and the cost of design, verification, and build.

The gripper includes at least two fingers. These gripper fingers may also be referred to as gripper jaws or gripper arms. The fingers are positioned about the object in an open configuration and closed about the object to a closed configuration to secure the object. The amount of compressive pressure provided is based on the distance between the interface of each finger with the object in the closed configuration (the closed distance). The compressive pressure may be controlled by closing the fingers of the gripper to a target closed distance.

In an embodiment, the closed distance may be a predetermined target closed distance. The predetermined closed distance may be based on the geometry and/or composition of the target object.

In another embodiment, the target closed distance may be controlled based on feedback generated as the gripper secures the object. In this embodiment, the target closed distance may not be known when the gripper fingers begin to close. As the interface of each gripper finger contacts the target object a measurement is obtained to generate the feedback. The measurement may indicate the gross compressive pressure or a compressive pressure from each element (e.g. via a Bragg grating). Gross compressive pressure may be considered the sum of all forces applied by the compressive elements divided by the total effective area. The feedback may be the raw measurement such as an electrical signal or the feedback may be calculated based on the measurement. The measurement may be obtained by a sensor. For example, the measurement may be obtained by one or more of a contact sensor, a position sensor, a current-based sensor, an optical sensor, visual inspection (e.g., by an imaging system), or the like.

The compressive pressure may be of a range. The range may be limited by gripper capability and/or object geometry and composition.

The systems, methods, and devices of the present disclosure may be used in robotics operations. In particular, the systems, methods, and devices may be particularly suited to and used in space-based robotics operations. Such space-based operations are often conducted in environments with gravities below 1G, including 0G environments. However, use of the systems, methods, and devices is not limited to these environments and their use outside of such environments is expressly contemplated by the present disclosure.

Space-based robotics operations in which the systems, methods, and devices of the present disclosure may be used include operations such as asteroid sampling, in-situ resource utilization (ISRU), or during orbital or space based debris removal. Certain objects encountered during these operations may limit the handling loads that can be used to manipulate them. An example is asteroid materials/ore (e.g., samples from asteroid Bennu) with the consistency of soft chalk. Further examples include orbital debris that is sensitive, such as solar panels, or past its end-of-life that could fracture during a debris remediation, break loose, and generate further debris objects including those classified as hazardous Foreign Object Debris (FOD) by space mission operators.

These objects may be fragile. The object may have a low compressive or yield strength. For example, the object may have a yield strength of <0.5MPa.

The target object may be characterized by irregular geometry. Furthermore, the object may be susceptible to damage unless minimal and/or even pressure is applied.

The material composition and geometry of the deflectable elements allow the deflectable elements to deflect. The deflection may cause the interface to accommodate uneven object contact surfaces. The accommodation may be achieved by the deflectable elements conforming or contouring to the contact surface. For example, the deflectable element may deflect to get out of the way of a high point in the object surface.

In an embodiment, the deflection uniformly distributes the compressive pressure about the contact surface. In doing so, the object experiences a minimal pressure gradient.

In a further embodiment, a limit of the pressure gradient may be set. Above this limit, nominal operations will not be entered into.

The accommodation of the deflectable elements may distribute the clamping load across the entire deflectable element surface. This distribution may maximize the effectiveness of total gross compressive pressure or total gross clamping pressure that the object experiences while ensuring some maximum contact force at the element scale. Therefore, this distribution minimizes the pressure and local force applied while still being able to complete the functional objective of grasping the object or sample.

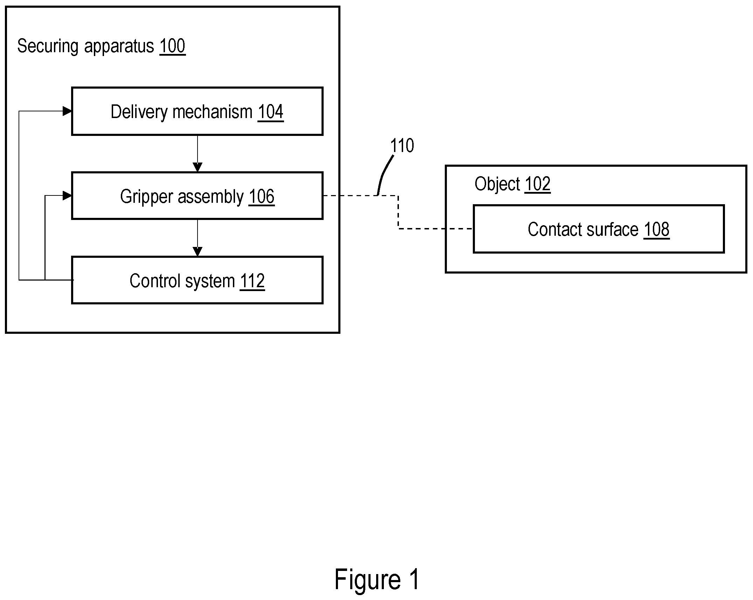

Referring now to Figure 1, shown therein is a block diagram of a securing apparatus 100, according to an embodiment. The securing apparatus 100 is configured to secure an object 102. The securing apparatus 100 secures the object 102 by gripping the object 102.

The securing apparatus 100 includes a delivery mechanism 104, a gripper assembly 106, and a control system 112.

The delivery mechanism 104 delivers the gripper assembly 106 to the object 102. In an embodiment, the delivery mechanism 104 is a robotic arm.

The gripper assembly 106 is affixed to a first end of the delivery mechanism 104. In embodiments where the gripper assembly 106 includes fingers that are not affixed to each other, the delivery mechanism 104 may include multiple separate mechanisms or means for delivering corresponding fingers of the gripper assembly 106. For example, the gripper assembly may be configured as jaws where each finger is delivered to the object by a separate actuator.

In an embodiment, the delivery mechanism 104 may center the gripper assembly 106 relative to the object 102. In another embodiment, the delivery mechanism 104 may position the gripper assembly 106 so that the object 102 is in contact with the gripper assembly 106.

In an embodiment, the delivery mechanism 104 floats about the object 102. In this embodiment, the delivery mechanism 104 may be a vehicle, such as a space vehicle and/or drone. For example, in an embodiment, the delivery mechanism 104 is a robotic arm on top of a space vehicle.

The gripper assembly 106 contacts the object 102 along a contact surface 108 of the object 102. The gripper assembly applies a gross clamping pressure 110 to the contact surface 108 of the object 102. The gross clamping pressure 110 is passively distributed as the gross clamping pressure 110 is applied to the object 102.

The gross clamping pressure 110 is distributed based on the geometry of the object 102. The gross clamping pressure 110 may also be distributed based on the composition of the object 102. The distribution may be based on the geometry and/or composition along the contact surface 108. The gross clamping pressure 110 may be applied evenly across the contact surface 108. The gross clamping pressure 110 may be applied such that the object 102 experiences an even force along a contact surface 108.

The control system 112 may control the delivery of the delivery mechanism 104 to the object 102.

The control system 112 may also control the application of the gross clamping pressure 110 to the object 102 by the gripper assembly 106. The control system 112 may limit the total gross clamping pressure 110 or force applied to the contact surface 108. The control system 112 may, for example, measure how much current is going into the actuator or motor. In a further example, the control system 112 may measure strain in parts of the gripper assembly such as in the fingers, arms, or jaws. This strain may be measured via piezoelectric, optical, or other means.

The control system 112 may serve as a backup to limit the gross clamping pressure 110 applied by the passive elements of the gripper assembly 106 further described below.

The object 102 may include space debris. The space debris 114 may be sensitive equipment such as a solar panel. The space debris may be debris in need of maintenance or repair. The space debris may be debris at or past its end-of-life.

The object 102 may include asteroid materials/ore. For example, the object 102 may include samples from an asteroid. The object 102 may also include one or more full asteroids. The asteroid may be an asteroid such as the asteroid Bennu. The object 102 may be retrieved by the securing apparatus 100 for further processing or use.

The object 102 may be fragile. Particularly, the object 102 may be brittle. The object 102 may have the consistency similar to that of soft chalk or a burnt-out log. The object 102 may have a yield strength of less than <0.5 MPa. It will be appreciated by those in the art that without modification, the retrieval apparatus 100 is capable of securing objects 102 that are not fragile.

The object 102 may be damaged if secured with a force that is above a certain threshold. For example, if the force exceeds the yield strength of the object 102 for ductile objects. In a further example, the force may exceed an ultimate strength, resulting in a brittle fracture. This damage may include fracture of the object 102. This fracture may cause the object 102 or a piece thereof to no longer be secured by the securing apparatus 100. This fracture may generate further debris objects.

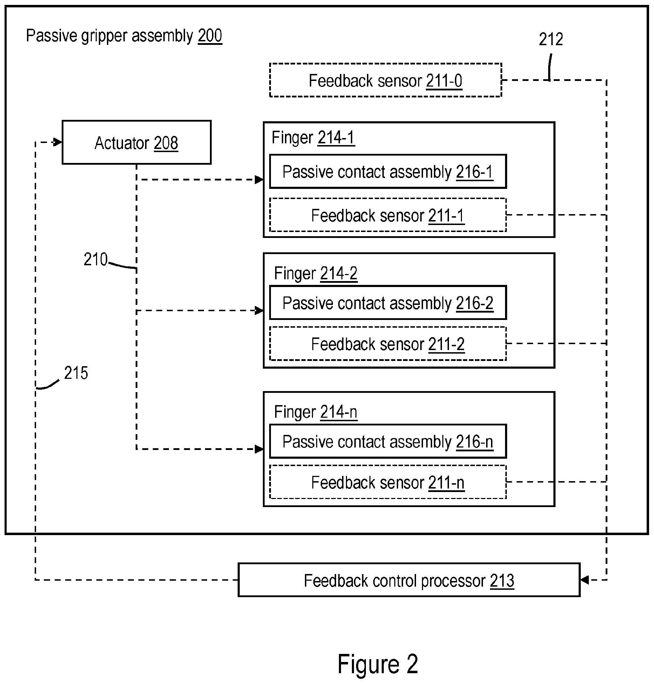

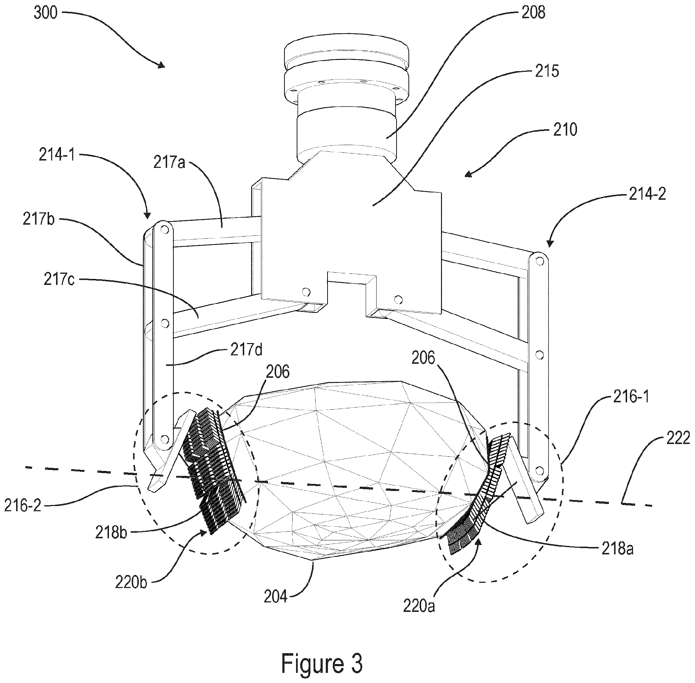

Referring now to Figures 2 and 3, Figure 2 shows a block diagram of a passive gripper assembly 200, according to an embodiment. The passive gripper assembly 200 may be the gripper assembly 106 of Figure 1.

Figure 3 illustrates an example 300 of the passive gripper assembly 200 of Figure 2, according to an embodiment. Components of passive gripper assembly 300 that perform the same or similar functions to components of the passive gripper assembly 200 of Figure 2 are given the same reference numbers.

The passive gripper assembly 200 may be used to grip a target object, such as object 204. The object 204 may be the object 102 of Figure 1.

The passive gripper assembly 200 applies a gross clamping pressure to the target object 204. The gross clamping pressure may be the gross clamping pressure 110 of Figure 1. The gross clamping pressure is applied along a contact surface 206 of the target object 204.

The passive gripper assembly 200 may be configured in an open configuration and a closed configuration. In the open configuration, the passive gripper assembly 200 is configured so that passive gripper assembly 200 may be positioned about the object 204. In the closed configuration (such as shown in Figure 3), the passive gripper assembly 200 is closed on the object 204, thereby gripping the object 204. The open and closed configurations may be based on a geometry and/or composition of the object 204.

The passive gripper assembly 200 includes an actuator 208.

The actuator 208 provides a load 210 for gripping. The load 210 transitions the gripper assembly 200 between the open configuration and closed configuration. The load 210 is transmitted to the contact surface 206 by the passive gripper assembly 200 to achieve the gross clamping pressure. The actuator 208 may be a linear actuator.

The actuator 208 may convert electric current to translational force. The actuator 208 may be controlled by an electronic signal. The electronic signal may be calibrated to deliver a calculated total gross clamping pressure to the contact surface of the target object (open loop system).

The actuator 208 may be manual operation such that a user manually transitions the passive gripper assembly from an open to a closed configuration. In some cases, a logical change of state may be used to open/close the gripper.

The passive gripper assembly 200 includes a plurality of gripper fingers 214-1, 214-2, and 214-n. Gripper fingers 214-1, 214-2, 214-n, may be referred to collectively as gripper fingers 214 and generically as gripper finger 214. The gripper fingers 214 transmit the load 210 provided by the actuator 208 to the contact surface 206 of the object 204. In embodiments, the number of fingers 214 may vary, with a minimum of two fingers. In Figure 3, the gripper assembly 300 includes first and second fingers 214-1, 214-2. Further variations of gripper assembly 300 may include three or more fingers 214.

The passive gripper assembly 200 may include a connecting element 215. The connecting element 215 connects a first end of each finger 214 to the actuator 208. The connecting element 215 may connect the first ends of the fingers 214 to each other. The first ends of the fingers 214 may be coincident at the connection point. The connecting element 215 may serve as a structural element of the passive gripper assembly 200.

Each 214 may include one or more mechanical linkages. For example, as shown in Figure 3, each finger 214-1, 214-2 includes four mechanical linkages 217a, 217b, 217c, 217d. The linkages 217 may be referred to collectively as linkages 217 and generically as linkage 217. The linkages 217 may vary in size and shape. The linkages 217 may be configured to direct the load.

Each finger 214-1, 214-2, 214-n includes a passive contact assembly 216-1, 216-2, 216-n. Passive contact assemblies 216-1, 216-2, 216-n may be referred to collectively as passive contact assembly 216 and generically as passive contact assembly 216. The passive contact assembly 216 is disposed at a second end of the finger 214. Passive contact assembly 216 is generally opposite the first end along a length of the corresponding finger 214.

The passive contact assembly 216 includes the portion of the finger that contacts the contact surface 206 of the object 204.

The passive contact assemblies 216-1, 216-2 include mounting structures 218a, and 218b, respectively. The mounting structures 218a and 218b may be referred to collectively as mounting structures 218 and generically as mounting structure 218. The mounting structure 218 provides a structure upon which a plurality of deflectable elements, further described below, are mounted.

In an embodiment, a plurality of deflectable elements 220 are mounted to a surface of the mounting structure 218. In a further embodiment, the deflectable elements 220 are at least partially embedded in the mounting structure 218.

The mounting structure 218 may be of various shapes. In an embodiment, the mounting structure 218 may be a planar structure. In this embodiment, the mounting structure may provide a planar surface for mounting the deflectable elements. In a further example, the mounting structure 218 may provide a non-planar surface such as a curved surface for mounting the deflectable elements.

In Figure 3, the passive contact assemblies 216-1, 216-2 further include the plurality of deflectable elements 220a and 220b, respectively. The deflectable elements 220a, 220b may be referred to collectively as deflectable elements 220 and generically as deflectable element 220.

The deflectable elements 220 are mounted on the mounting structure 218. The deflectable elements 220 deflect when interacting with the contact surface 206 of the target object 204.

The deflection of the deflectable elements 220 causes the passive contact assembly 216 to conform to the contact surface 206 of the target object 204. As the deflectable elements 220 are plural in quantity, they respond readily to irregularities in the geometry and composition of the contact surface 206. The deflectable elements thus provide an advantage over pads or bands that rely predominately on the singular and overall elasticity of the material to distribute the pressure applied, rather than the variable configuration and individual properties such as discrete elasticity of the plural deflectable elements 220.

The fingers 214 may be configured such that the passive contact assemblies 216 translate about a plane (see plane 222 of Figure 3). In an embodiment, the plane is oriented such that the passive contact assemblies 216 approach the object 204 normally or perpendicularly.

The passive gripper assembly 200 includes feedback sensors 211-0 211-1, 211-2, 211-n. In the embodiment of Figure 2, each finger 214 has a corresponding feedback sensor. Feedback sensor 211-0 corresponds generally to gripper assembly 200. In other embodiments, fewer or more feedback sensors may be used. Feedback sensors 211-0, 211-1, 211-2, 211-n may be referred to collectively as feedback sensors 211 and generically as feedback sensor 211. In some embodiments, no feedback sensor may be used.

The feedback sensor 211 is configured to measure a change in the passive gripper assembly 200 such as strain or deflection of a component of the passive gripper assembly 200. The change may indicate the compressive pressure provided by each passive contact assembly 216 jointly and/or separately.

In an embodiment, the feedback sensor 211 measures pressure applied by the passive gripper assembly 200 indirectly. In this example, the feedback sensor 211 may be an optical feedback sensor 211. The optical sensor 211 measures the pressure applied by optically sensing and measuring the deflection of the deflectable elements 220, further described below. The optical feedback sensor 211 may be an infrared sensor. The optical feedback sensor 211 may be an image sensor. The deflection may be determined by analyzing an image captured by the image sensor. The analysis may be accomplished through image recognition software and/or by visual inspection.

In a further embodiment, the feedback sensor 211 may measure a deformation of the mounting structure 218, further described below, that is a result of a reaction force. As the reaction force is equivalent in magnitude to the force applied by the passive gripper assembly 200, the magnitude of the force applied can be calculated based on the measured deformation. The feedback sensor 211 may be a strain gauge. The strain gauge may be applied to the mounting structure.

The feedback sensor 211 generates and transmits a feedback signal 212. In an example, the feedback signal 212 is an electrical signal or result of the raw measurement such as a change in resistance of a strain gauge. In a further example, the feedback signal 212 is calculated based on the measurement.

The feedback sensor 211 is communicatively connected to a feedback control processor 213. The connection transmits the signal 212 generated by the feedback sensor 211 to the feedback control processor 213. The feedback control processor 213 may calculate the gross clamping pressure applied by the passive contact assembly 216 on the object 204. The feedback control processor 213 may be included in the feedback control system 112 of Figure 1.

The feedback control processor 213 generates a control signal 215 based on the received feedback signal 212. The feedback control processor 211 outputs the control signal 215 to the actuator 208. The control signal 215, when received, may cause the actuator 208 to adjust the load 210 provided. In an embodiment, the control signal 215 is modal (off/on) such that it controls whether the actuator 208 provides a load 210 to the fingers 214. In another embodiment, the control signal 215 is graduated such that it controls a magnitude of the load 210 provided.

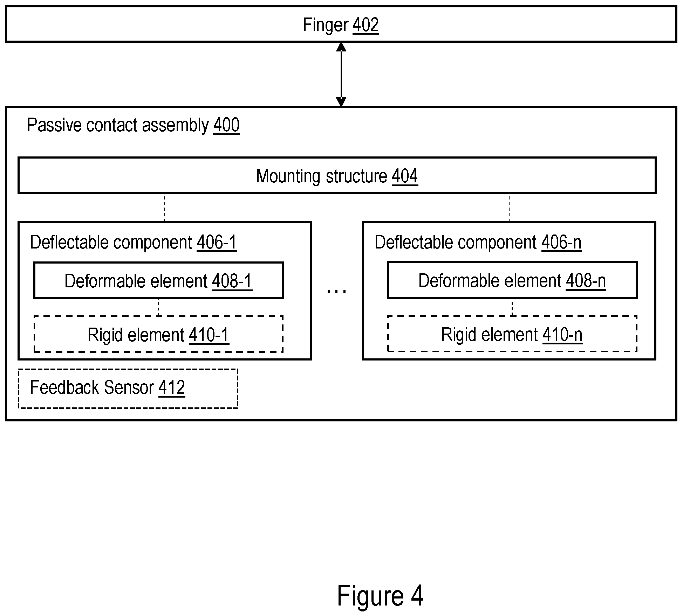

Referring now to Figure 4, shown therein is a block diagram of a passive contact assembly 400, according to an embodiment. The passive contact assembly 400 serves as an interface between finger 402 and a contact surface of an object. The passive contact assembly 400 may be the passive contact assembly 216 of Figures 2 and 3.

The passive contact assembly 400 includes a plurality of deflectable components 406 mounted to a mounting structure 404. The mounting structure 404 may be the mounting structure 218 of Figure 3. The deflectable components 406 may be partially embedded in the mounting structure 404. Generally, the deflectable components 406 may be mounted side by side in one or more rows. In some cases, the deflectable components 406 may be evenly spaced from one another on the mounting structure 404. Other configurations and orientations of deflectable elements on the mounting structure 404 are contemplated.

The deflectable components 406 are configured to deflect upon contact with an object. The deflection is the result of pressure of the object on the deflectable component 406. The deflection includes a displacement of a portion of the deflectable component 406 from an unloaded position to a loaded position when exposed to an external force (loading). The loaded position of the deflectable component 406 may be considered any position in which the element is deflected and/or bent from its unloaded position or axis. For example, a deflectable component 406 may have an unloaded position that is perpendicular or orthogonal to the surface of the mounting structure 404, with a loaded position deviating from that perpendicular orientation. In an embodiment, the loading may be in response to contact with an object.

In an example, the passive contact assembly 400 is configured in a hairbrush like structure where the mounting structure 404 is the core or frame of the brush and the deflectable elements 408 are the bristles.

Each deflectable component 406 includes at least one deformable element 408. The deformable element 408 deforms upon loading. The deformation may be the result of pressure of the object on the deflectable component 406. The deformation is structural in that the deformable element 408 transitions from a first configuration (i.e., expanded and/or straight) to a second configuration (i.e., compressed and/or bent). The deformation results in the deflection of the deflectable component 406. The entirety of the deflectable component 406 may be deformable, such as in embodiments where the deformable elements 408 are bristles.

In some embodiments, the deflectable component 406 may include at least one rigid element 410. The rigid element 410 is physically connected to at least one deformable element 408 of each deflectable component 406. The rigid element 410 is substantially rigid in that it does not deform upon contact of the corresponding deflectable component with the object. The rigid element 410 may serve as an extension of the deflectable component 406 while maintaining the deformable properties of the deformable element 408.

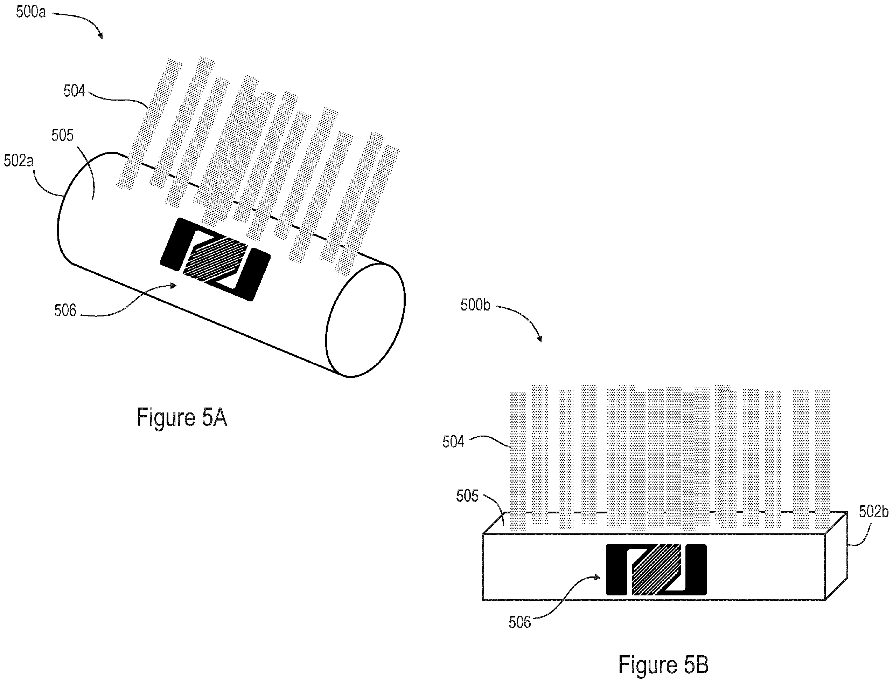

Referring now to Figures 5A and 5B, shown therein is a perspective view schematic of passive contact assemblies 500a and 500b, according to various embodiments. The passive contact assemblies 500a and 500b are referred to generically and passive contact assembly 500 and collectively as passive contact assemblies 500. The passive contact assembly 500 may be the passive contact assembly 400 of Figure 4.

The passive contact assembly 500 may be disposed at a free end of a finger, such as finger 214 of Figures 2 and 3.

The passive contact assemblies 500a and 500b include mounting structures 502a, 502b, respectively. The mounting structure 502a is a cylindrical prism. The mounting structure 502b is a rectangular prism. In other embodiments, the mounting structure may be any other suitable geometric arrangement.

The passive contact assembly 500 includes a plurality of deflectable components 504. Each deflectable component 504 is affixed to the mounting structure 502. In an embodiment, the deflectable components 504 may be affixed by embedding each deflectable component 504 into the mounting structure. In another embodiment, each deflectable component 504 may be affixed to the mounting structure 502 via other mechanism such as an adhesive, tape, or wrapper through which each deflectable element 504 penetrates.

The deflectable components 504 may be arranged to cover a surface 505 of the mounting structure that is to be directed toward a target object during gripping. The deflectable components 504 may be arranged on the surface 505 linearly. For example, the deflectable components 504 may be arranged in one or more parallel rows.

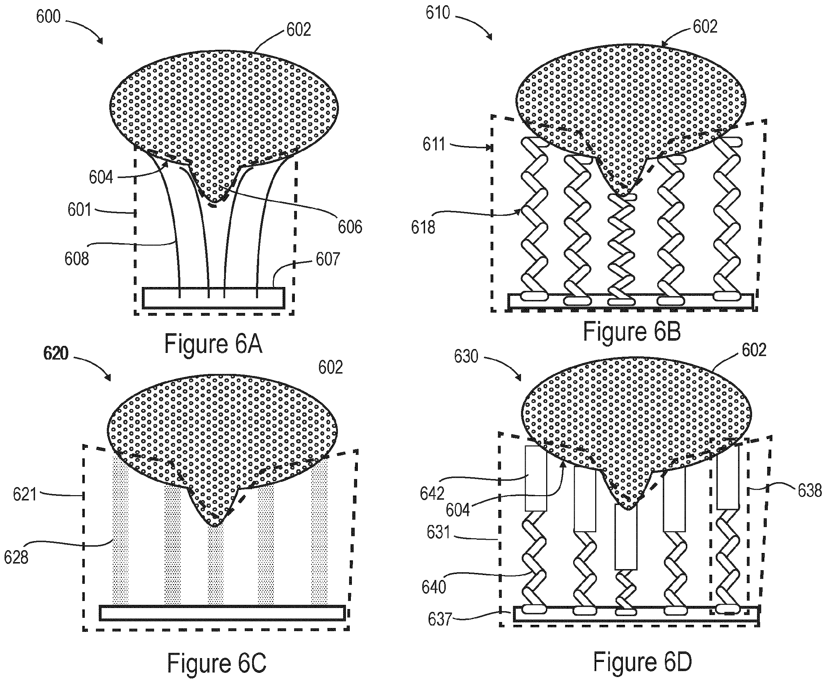

Referring now to Figure 6A, shown therein is a cross sectional schematic view 600 of a bending element passive contact assembly 601 contacting an object 602, according to an embodiment. The bending element passive contact assembly 601 may be the passive contact assembly 500 of Figure 5.

The object 602 includes contact surface 604. The contact surface 604 is a surface of the object 602 which contacts the bending element passive contact assembly 601.

The contact surface 604 may include at least one irregularity such as irregularity 606. Generally, irregularity 606 is a portion of the contact surface 604 that deviates from a consistent/regular surface. Geometric irregularities tend to increase the stress concentration when a load is applied. The deviation may be in geometry and/or composition. For example, the irregularity 606 may be one or more of a high point, an exposed cleavage plane, overhanging material, a region with smaller radius of curvature connecting two segments, a protrusion (as shown), a recess, a soft spot, a hard spot, and a spot whose texture differs from the surrounding area. The material irregularities might not be visible, but correspond to anisotropic material property regions; softer material, partly fractured material, fatigued regions of ductile material, regions with high volatile concentrations.

The bending element passive contact assembly 601 includes a plurality of bending elements 608 mounted to a mounting structure 607. Bending element 608 may be the deflectable component 504 of Figure 5 or the deflectable component 406 of Figure 4. Each bending element 608 includes first and second opposing ends. The bending element 608 is mounted to the mounting structure 607 via the first end. The second end (or free end) of the bending element 608 is unconstrained. The second end is the portion of the bending element that contacts the contact surface 604.

In an embodiment, the bending elements 608 may be bristles.

Each bending element 608 deforms and deflects from its unloaded axis upon contact with the contact surface 604. It will be appreciated that the deflection and deformation is elastic such that the bending element 608 returns to its unloaded axis if contact is removed. The bending of each bending element 608 distributes a force applied to the object by the bending element passive contact assembly 601. This distribution may be an even distribution.

Each bending element 608 mounted to a mounting structure 607 may be different than other bending elements 608. The differences may include differences in the position, arrangement, dimension (e.g., size), spring stiffness, and the like, of the bending element 608. Therefore, each bending element 608 may experience different applied pressures as a result of loading. As the deflection of the bending element 608 is in response to the loading, the different applied pressures may result in different amounts of deflection of each bending element 608. This is particularly true in the case where the contact surface 604 includes an irregularity 606. Therefore, by deflecting in response to the loading, the bending elements 608 in loaded positions are configured such that the passive contact assembly 601 conforms to the contact surface of the object. This configuration is achieved before the passive contact assembly transmits significant gross contact pressure to the object. This configuration may also distribute and/or direct the gross clamping pressure in a manner less likely to damage the object 602.

The bending may also direct a portion of the force tangential to the contact surface 604. This provides a shearing or frictional component to the force. The tangential aspect of this force may reduce the potential for the force to damage the object 602 and may also provide a better grip on the object.

Referring now to Figures 6B and 6C, shown therein are cross-sectional schematic views 610, 620, respectively, of compressive element passive contact assemblies 611, 621 contacting an object 602, according to embodiments. The compressive element passive contact assemblies 611, 621 may each be the passive contact assembly 500 of Figure 5.

The compressive element passive contact assemblies 611, 621 include compressive elements 618 and 628, respectively.

Each compressive element 618, 628 deforms and deflects upon contact with the object 602 such that a distance between a first end and a second end of a respective compressive element 618, 628 shortens in length. It will be appreciated that the deflection and deformation is restorative such that the compression element 618, 628 returns to its undeformed length if contact is removed. The compression of each compressive element 618, 628 distributes a force applied to the object by the compressive element passive contact assembly 611, 621. This distribution may be an even distribution.

Each compressive element 618, 628 mounted to a mounting structure 607 may be different than other compressive elements 618, 628. The differences may include differences in the position, arrangement, dimension (i.e. size), spring stiffness, and the like, of the compressive element 618, 628. Therefore, each compressive element 618, 628 may experience different applied pressures as a result of loading. As the deflection of the compressive element 618, 628 is in response to the loading, the different applied pressures may result in different amounts of deflection of each compressive element 618, 628. This is particularly true in the case where the contact surface of the object 602 includes an irregularity. Therefore, by deflecting in response to the loading, the compressive elements 618, 628 in loaded positions are configured such that the passive contact assembly 610, 620 conforms to the contact surface of the object. This configuration is achieved before the passive contact assembly transmits significant gross contact pressure to the object. This configuration may also distribute and/or direct the gross clamping pressure in a manner less likely to damage the object.

Referring specifically to Figure 6B, the compressive element 618 is a proportionally compressive element such as a linear spring or a soft spring. The compressive element 618 stiffens at a rate when deflected. The stiffening rate may be determined empirically. The compressive elements 618 may have various spring rate profiles (e.g. a leaf spring that stiffens nonlinearly with deflection). The force applied (F) by the compressive element 618 on the object 602 is proportional to the deflection (i.e. compression, x) of the compressive element 618 and a spring rate (k). For example, in embodiments of the compressive element 618 including a linear spring, the F=k*x for the linear spring aspect of the compressive element 618.

The compressive element 618 may include elements that have non-linear compressive stiffness. For example, once the compression or compressive force is past a threshold, the compressive element may reduce its stiffness so that other compressive elements 618 engage and spread out the total load. It will be appreciated that this is similar to a non-Hertzian, shear-thinning behavior in some fluids.

Referring specifically to Figure 6C, the compressive element 628 is a damping element. The force applied by the compressive element 628 on the object 602 is proportional to at least the velocity of the deflection of the compressive element 628. The damping of the damping element acts opposite to the direction of motion and removes kinetic energy, typically in the form of heat. In an embodiment, the compressive element 618 includes a compressible fluid, rubber, and/or foam.

Referring now to Figure 6D, shown therein is a cross-sectional schematic view 630 of a rigid element passive contact assembly 631 contacting an object 602, according to an embodiment. The rigid element passive contact assembly 631 may be the passive contact assembly 500 of Figure 5. The contacting illustrated in Figure 6D may occur during an attempt to grip the object 602 with a passive gripper, such as described herein.

The rigid element passive contact assembly 631 includes deflectable components 638.

Each deflectable component 638 includes at least one deformable element 640 connected to a rigid element 642.

The deformable element 640 deforms and deflects when the deflectable component 638 contacts the object 602. The deformable element 640 may be an element such as the bending element 608 of Figure 6A or the compressible element 618, 628 of Figures 6B and 6C, respectively.

The rigid element 642 of deflectable component 638 may be the rigid element 410 of Figure 4. The rigid element 642 is substantially rigid in that it does not deform when the deflectable component 638 contacts the object 602.

The rigid element 642 may extend the reach of the deflectable component 638 beyond that of the deformable element 640 alone. Extending the reach of the deflectable element 638 with a rigid element 642 may provide extension without substantially affecting properties of the deflectable component 638 provided by the deformable element 640. The rigid element 642 may direct the gross clamping pressure.

In an embodiment, the rigid element 642 is disposed at a free end of the deflectable component 638 (as depicted in Figure 6D), while the deformable element 640 is connected to mounting structure 637. In this disposition, the rigid element 642 provides the interface between the deflectable component 638 and the contact surface 604.

In another embodiment, (not shown) the deformable element 640 is disposed at a free end of the deflectable component 638 and the rigid element 642 is disposed at a first end of the deflectable component 638 proximal to the mounting structure 637. In this disposition, the rigid element 642 may be physically connected to mounting structure 637. It is noted that other configurations are contemplated, such as a deflectable component 638 that includes a deformable element 640 disposed between two rigid elements 642. The deformable element 640 may include one or a combination of the deformable elements 618 and 628 of Figures 6B and 6C (e.g., a spring and a damper).

Referring again to Figure 4, the passive contact assembly 400 includes a feedback sensor 412. The feedback sensor 412 measures the amount of force applied by the passive contact assembly to an object being gripped. The feedback sensor 412 may be mounted on the mounting structure 404. The feedback sensor 412 may be the feedback sensor 211 of Figure 2. Feedback sensor 506 of Figures 5A, 5B is an example of feedback sensor 412.

Referring specifically to Figures 5A and 5B, feedback sensor 506 may measure a deformation of the mounting structure 502 that is a result of a reaction force. The feedback sensor 506 may be a strain gauge. The strain gauge may be applied to the mounting structure 502.

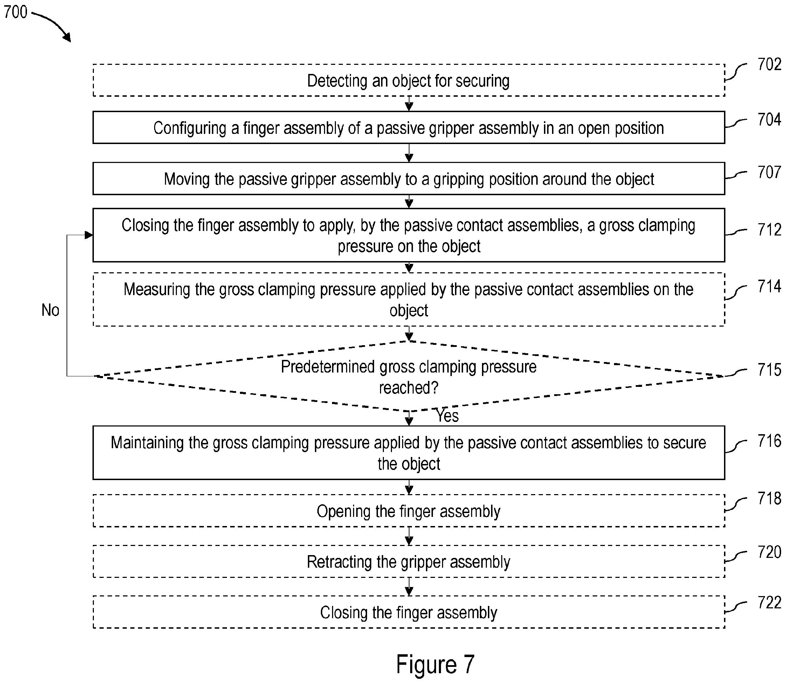

Referring now to Figure 7, showing therein is a method 700 for gripping an object using a passive gripper assembly, according to an embodiment.

At 702, the method 700 includes detecting a target object to be gripped by the gripper assembly.

In an embodiment, the target object may be detected by a person. The person may be aided by sensor devices.

In another embodiment, the target object is detected by a sensor. The sensor may be an optical device such as camera or infrared (IR) sensor.

At 704, the method 700 includes configuring a finger assembly of the passive gripper assembly in an open position. The finger assembly includes a plurality of gripper fingers (e.g., fingers 214 of Figure 2).

In the open position, the gripper fingers are positioned such that their respective passive gripper assemblies are at a separation distance from one another. The separation distance defines a space that is greater than that of the target object. In other words, the gripper fingers are positioned such that the target object can fit between respective passive contact assemblies of each finger without contacting any of the passive contact assemblies.

The opening of the passive gripper assembly may be greater in magnitude than the minimum opening necessary to accommodate the object.

The open position may be achieved by opening each finger various amounts. In other words, in some cases, each finger may travel a different amount. In some cases, one or more fingers may remain static while at least one finger moves.

At 707, the method 700 includes moving, with a delivery mechanism, the passive gripper assembly to a gripping position around the object to be gripped.

Moving the gripper assembly to the gripping position includes positioning the fingers of the finger assembly around the object to be gripped. The delivery mechanism may position the passive contact assemblies of the passive gripper assembly such that the object to be gripped is centered between the passive contact assemblies. In other cases, the delivery mechanism may position at least one but not all of the passive contact assemblies in minimal contact with the object. The initially contacted passive contact assemblies may remain static during the securing process (i.e., as one or more other fingers of the gripper move towards the static passive contact assembly).

At 712, the method 700 includes closing the gripper fingers of the passive gripper assembly. In an embodiment, the gripper fingers are closed until a predetermined gross clamping pressure on the object being gripped is determined to be reached.

The fingers may be closed by an incremental amount. Closing the finger assembly includes moving one or more passive contact assemblies such that the space between the passive contact assemblies (and in which the object is positioned) is reduced. It will be appreciated that the object may shift in either position or orientation during the closing of the fingers. The passive contact assemblies may move substantially on a plane. In an embodiment, this plane is oriented such that the passive contact assemblies approach the object normally or perpendicularly.

In an embodiment, the gross clamping pressure may be determined to be reached based on a predetermined position or current level of the actuator. This determination may be accomplished without indication of force at the gripper tip (i.e. in the gripper assembly). It will be appreciated that a translation closing limit of the passive gripper assembly may be reached before the predetermined gross clamping pressure is determined to be reached. In this instance, a closure up to the translation closing limit may be determined to be sufficient to secure the object. As such, the method may proceed without reaching the set gross clamping pressure.

Optionally, at 714, the method 700 includes measuring the gross clamping pressure applied by at least one of the passive contact assemblies. This measurement may be recorded by a feedback sensor.

Optionally, at 715, the method 700 includes comparing the measured gross clamping pressure with a predetermined gross clamping. In embodiments that include a feedback sensor, the feedback sensor provides a feedback signal indicating the measured gross clamping pressure to a feedback control processor. The feedback control processor compares the measured gross clamping pressure indicated by the feedback signal with the predetermined gross clamping pressure to determine if the predetermined gross clamping pressure has been reached. Based on a result of the comparison, the feedback control processor may provide a control signal to the actuator. If the comparison indicates that the gross clamping pressure is not reached, the control signal may cause the actuator to further close the finger assembly such as at 712. The magnitude that the finger closes may be based on a magnitude of the control signal. The closing, measuring, and comparing of 712-715 respectively may be repeated until the gross clamping pressure or a limit of the finger assembly is reached.

At 716, the method 700 includes maintaining, by the passive gripper assembly, the gross clamping pressure on the object applied by the passive contact assemblies to secure the object. The method of securing the object may reduce the risk of damage to the object over known methods. The gross clamping pressure is maintained by positioning the passive contact assemblies such that sufficient gross clamping pressure is applied to the object to secure it. Once secured, the object may be manipulated (e.g., transported, operated on), for example by robotically moving the gripper assembly.

Optionally, at 718, the method 700 includes opening the finger assembly. The finger assembly may be opened such that the object is released. This may include moving one or more fingers of the finger assembly.

Optionally, at 720, the method 700 includes moving the gripper to a home position. This may be accomplished via the delivery mechanism.

Optionally, at 722, the method 700 includes closing the finger assembly. The finger assembly may be closed into a storage configuration.

While the above description provides examples of one or more apparatus, methods, or systems, it will be appreciated that other apparatus, methods, or systems may be within the scope of the claims as interpreted by one of skill in the art.

## Claims

1. An apparatus for gripping fragile or irregularly shaped objects, the apparatus comprising:
a passive gripper assembly comprising:
an actuator for providing a load to the passive gripper assembly; and
a plurality of fingers each to transmit the load to the object, each one of the plurality of fingers comprising:
a mechanical linkage having a first end connected to the actuator and a second, free end, the mechanical linkage configured to direct the load to the object; and
a contact assembly disposed at the free end of the mechanical linkage that acts as a gripping interface between the finger and a contact surface of the object;
wherein at least one of the contact assemblies is a passive contact assembly comprising a plurality of deflectable elements configured to deflect upon contacting the contact surface of the object to distribute a gross clamping pressure; and
wherein the load causes the fingers of the passive gripper assembly to close around the object such that the contact assemblies contact and apply the gross clamping pressure to the object based on a magnitude of the load.

2. The apparatus of claim 1, wherein the deflectable element includes at least one deformable element that deforms when the deflectable element contacts the contact surface of the object, and wherein the deflection of the deflectable element is based on the deformation of the deformable element.

3. The apparatus of claim 2, wherein the deformable element is one or more of a bending element, a compressive element, a proportional element, and a damping element.

4. The apparatus of claim 2, wherein the deflectable element includes at least one rigid element that remains substantially undeformed when the deflectable element deflects.

5. The apparatus of claim 1, further comprising a feedback sensor configured to measure a change in the passive gripper assembly wherein a magnitude of the change indicates a magnitude of the gross clamping pressure provided by the passive gripper assembly on the object at the time of the measurement.

6. The apparatus of claim 5, wherein the feedback sensor is disposed on the mechanical linkage of at least one finger or on the mounting structure of the passive contact assembly.

7. The apparatus of claim 5, wherein the feedback sensor is an optical feedback sensor, an infrared feedback sensor, or a strain gauge.

8. The apparatus of claim 5, wherein the change of the passive gripper assembly is a strain or deflection of a component of the passive gripper assembly.

9. The apparatus of claim 5, further comprising a control system communicatively connected to the actuator and configured to provide a control signal to the actuator for controlling the load, wherein the load provided by the actuator is based on the control signal, the feedback sensor is configured to provide a feedback signal indicating a current gross clamping pressure to the control system, and the control signal is based on a comparison of the current gross clamping pressure and a predetermined gross clamping pressure by the control system.

10. The apparatus of claim 1, wherein the deflectable elements are cantilevered bristles or other spring elements that deflect to limit contact force applied to the object.

11. The apparatus of claim 10, wherein the feedback sensor is a strain gauge affixed to at least one of the cantilevered bristles or other spring elements.

12. The apparatus of claim 1, further comprising an imaging system configured to image the gripper assembly while gripping the object and analyze the image to determine if pressure points of the contact assemblies on the object exceed a predetermined threshold load force.

13. The apparatus of claim 12, wherein the imaging system applies a shape function to the object in the image, and wherein analyzing the image includes analyzing the shape function.

14. The apparatus of claim 1, wherein each of the deflectable elements comprises one of a spring element, damping element, and bending element traversing an entire length of the deflectable element.

15. The apparatus of claim 1, wherein each of the deflectable elements comprises a plurality of subelements disposed in series, the subelements selected from two or more of a spring element, damping element, bending element, and rigid element.
